# EUROPEAN PATENT APPLICATION

(11) **EP 4 563 228 A1**
(43) Date of publication of application: **04.06.2025**
(21) Application number: 23846323.6
(22) Date of filing: 19.07.2023
(51) Int. Cl.: B02C 18/00, B02C 18/14, B09B 3/35, B09B 3/70, B09B 101/67, B09B 101/75, B09B 101/85

(54) **BAG BREAKING DEVICE AND BAG BREAKING PROCESSING METHOD**

(30) Priority: 25.07.2022 JP 2022118122
(71) Applicant: Kurita Water Industries Ltd., Tokyo 164-0001 (JP)
(72) Inventor: TOKUTOMI, Takaaki, Tokyo 164-0001 (JP); HIROTAKI, Shouta, Tokyo 164-0001 (JP); NAKAYAMA, Takurou, Tokyo 164-0001 (JP)
(74) Representative: Hoffmann Eitle
(86) International application number: PCT/JP2023/026423
(87) International publication number: WO 2024/024592

(57) **Abstract**

A bag breaking device for tearing a waste accommodating bag body uses a drum-type washing machine which has: a water tank 2 for storing washing water; a bottomed cylindrical rotary tub 3 which is rotatably supported inside the water tank 2 such that the rotation axis thereof is substantially horizontal and which accommodates laundry; and a motor 5 which rotates the rotary tub 3, in which a blade 12 for bag breaking is provided on the inner circumferential surface of the rotary tub 3. A method for processing a waste accommodating bag body uses the bag breaking device.

## Description

### Technical Field

The present invention relates to a bag breaking device and a bag breaking processing method for tearing a bag accommodating waste.

### Description of Related Art

Conventionally, bag breaking devices that tear bags made of resin film accommodating waste by using rotating blades are widely known (Patent Documents 1 to 3).

Conventional bag breaking devices possess the function of tearing bags, but do not possess the function of washing the waste that has exited from the broken bags.

Furthermore, conventional bag breaking devices are not completely sealed structures, and during bag breaking, the contents exit to the outside, contaminating the surroundings. Therefore, there were issues in processing infectious waste or substances that emit foul odors.

### Related Art

### Patent Literature

Patent Literature 1: Japanese Patent Application Laid-Open No. 2019-844
Patent Literature 2: Japanese Patent Application Laid-Open No. 2009-247925
Patent Literature 3: Japanese Patent Application Laid-Open No. 2008-43934

### SUMMARY

### Technical Problem

The present invention aims to provide a bag breaking device that can tear a bag accommodating waste and wash the waste that has exited from the torn bag, as well as a bag breaking processing method using the bag breaking device.

### Solution to the Problem

The summary of the present invention is as follows.
[1] In a bag breaking device for tearing a waste accommodating bag body,
   the bag breaking device uses a drum-type washing machine that includes a water tank for storing washing water, a rotary tub of a bottomed cylindrical shape which is rotatably supported inside the water tank such that a rotation axis thereof is substantially horizontal and which accommodates laundry, and a motor for rotating the rotary tub, in which
   a blade for bag breaking is provided on an inner circumferential surface of the rotary tub.
[2] A protrusion extending in a direction parallel to an axis line of the rotary tub is provided on the inner circumferential surface of the rotary tub, and
   the blade is attached to the protrusion in the bag breaking device according to [1].
[3] A method for processing a waste accommodating bag body includes: a waste accommodating bag body is torn using the bag breaking device according to [1] or [2], and subsequently washing of waste and a bag residue is performed inside the rotary tub.
[4] The method for processing a waste accommodating bag body according to [3] further includes: at least one of dewatering, drying, chemical treatment, and heat treatment is performed.
[5] In the method for processing a waste accommodating bag body according to [4], a chemical for the chemical treatment includes at least one of an oxidizing agent, a disinfectant, and a cleaning agent (surfactant).
[6] In the method for processing a waste accommodating bag body according to [3], the waste includes a used paper diaper.

### Effects

According to the present invention, by placing a bag body accommodating waste into the rotary tub and rotating the rotary tub, the bag can be broken. Additionally, by adding water to the rotary tub, the waste and bag residue can be washed inside the rotary tub (washing may also be performed using a cleaning agent or surfactant). By using water containing an oxidizing agent or disinfectant, the waste and other materials can be sterilized. Furthermore, sterilization treatment can be performed by raising the temperature of the washing water with steam or the like to carry out the processing.

After washing, dewatering can be performed by rotating the rotary tub at high speed. Furthermore, by supplying hot air into the rotary tub, the waste and other materials can be dried. Heat sterilization can also be performed by increasing the temperature of the hot air for heat treatment.

According to the present invention, the work of tearing a bag and removing contents becomes unneeded.

Additionally, according to the present invention, the opportunity for a worker to directly contact used contents is almost eliminated, improving work safety. A bag breaking rate of 99% or higher may be achieved, eliminating the need for additional manual work.

According to the present invention, even for the waste with odors, high-quality recycling becomes achievable by performing washing. Additionally, by washing the waste, contaminants can be removed from the recovered materials, increasing purity of the waste and enhancing value of the waste during recycling.

### BRIEF DESCRIPTION OF THE DRAWINGS

FIG. 1 is a vertical cross-sectional view of a bag breaking device according to an embodiment of the present invention.
FIG. 2 is a perspective view showing the mounting structure of the blade.

### DESCRIPTION OF EMBODIMENTS

Hereinafter, an embodiment of the present invention is described with reference to the accompanying drawings. It should be noted that the present invention is not limited by the embodiment.

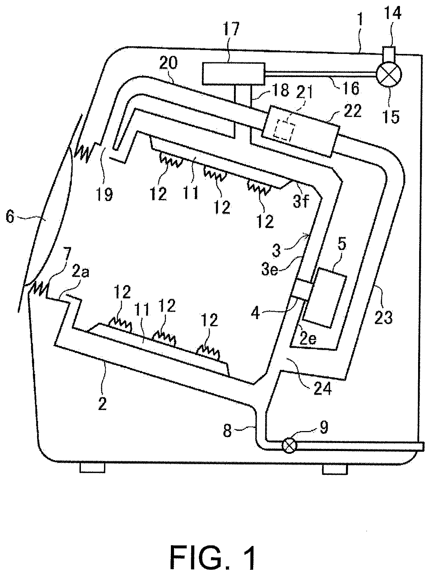

FIG. 1 is a vertical cross-sectional view of a bag breaking device (a drum-type washing machine including blades 12) according to an embodiment of the present invention.

In FIG. 1, a water tank 2 is supported inside a housing 1 via suspension support members (not shown), and a rotary tub 3 formed in a cylindrical shape having a bottom is disposed inside the water tank 2. Multiple dewatering holes (not shown) are provided on a circumferential surface 3f of the rotary tub 3. Additionally, a mesh-like ventilation part is provided on a rear wall surface 3e of the rotary tub 3.

The water tank 2 and the rotary tub 3 are supported with open end sides thereof towards the front side of the housing 1 and bottom sides thereof towards the back side of the housing 1, sloping downward from the horizontal direction from the front side to the back side (although not shown in the figure, the water tank 2 and the rotary tub 3 may be supported to be approximately horizontal from the front side to the back side). The rotary tub 3 is rotationally driven by a motor 5 via an axis 4.

A door panel 6 is provided on the housing 1 facing the open end side of the rotary tub 3. One side edge of the door panel 6 is supported by a hinge on the housing 1. A lock mechanism is provided on the housing 1 to perform locking and unlocking of the other side edge of the door panel 6. By opening the door panel 6, a waste accommodating bag body can be inserted into and removed from the rotary tub 3. A bellows 7, formed of a flexible elastic material, is disposed around a laundry inlet/outlet 2a of the water tank 2. When the door panel 6 is closed, one end of the bellows 7 is pressed against the inner surface thereof, preventing water from splashing out from inside the water tank 2.

Multiple (for example, 3 to 6) protrusions 11 are provided on the inner circumferential wall of the rotary tub 3. By rotating the rotary tub 3 at low speed, the waste accommodating bag body or the waste drawn out therefrom can be caught by the protrusions 11 and lifted upward.

The protrusions 11 are provided as convex strips extending in a direction parallel to the rotation axis of the rotary tub 3. Blades 12 for bag breaking are provided on the protrusions 11.

A water supply path for supplying water into the water tank 2 is provided, including a water inlet 14, a water supply valve 15, a first water supply path 16, a detergent addition part 17, and a second water supply path 18.

A drain path 8 for draining water from inside the water tank 2 is connected to the bottom part of the water tank 2. A drain valve 9 for opening and closing the path is provided midway along the drain path 8. By closing the drain valve 9 and storing water, detergent, etc. inside the water tank 2, the rotary tub 3 functions as a washing chamber.

In addition, by opening the drain valve 9 and draining the water, detergent, etc. stored in the water tank 2 through the drain path 8, and rotating the rotary tub 3 at high speed, the accommodated objects are pressed against the circumferential surface 3f of the rotary tub 3 by centrifugal force. At this time, the moisture contained in the accommodated objects escapes through multiple dewatering holes provided on the circumferential surface 3f of the rotary tub 3 into the space between the water tank 2 and the rotary tub 3, and is drained through the drain path 8. In this way, the rotary tub 3 also functions as a dewatering chamber.

Furthermore, the structure inside the rotary tub 3 allows for circulation of hot air through a suction port 19, an air supply path 20, a heater 21, an air supply means 22 having a fan and a motor, and an air supply path 23. During hot air supply, the rotary tub 3 also functions as a drying chamber. The airflow in the drying process is described below.

The air sucked in from the suction port 19 and supplied by the air supply means 22 is heated by the heater 21, becomes hot air, is guided to the back side of the water tank 2 through the air supply path 23, and is blown into the water tank 2 from a discharge port 24 provided on a back 2e of the water tank 2. The hot air blown into the water tank 2 passes through the ventilation part (not shown) provided on the rear wall surface 3e of the rotary tub 3 and is blown onto the accommodated objects stored in the rotary tub 3. The air after evaporating moisture from the accommodated objects escapes through the dewatering holes on the circumferential surface of the rotary tub 3 into the space between the water tank 2 and the rotary tub 3, and is guided from the suction port 19 to the air supply path 20, reaching the air supply means 22 again. Although not shown, a dehumidifying means for cooling and dehumidifying the moisture evaporated from the accommodated objects is provided midway along the air supply path 20 before reaching the air supply means 22.

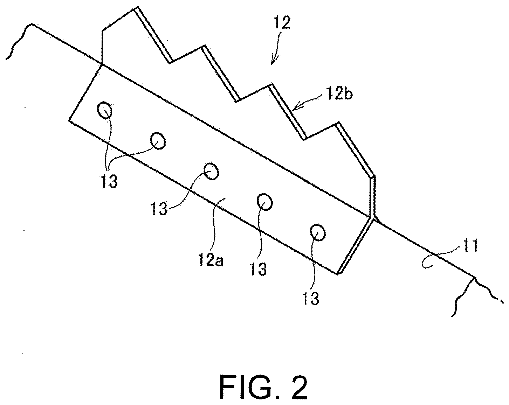

As shown in FIG. 2, the protrusion 11 has an approximately triangular cross section in the circumferential direction of the rotary tub 3. More specifically, the cross section is approximately triangular, becoming narrower as the cross section rises from the inner circumferential surface of the rotary tub 3.

The blade 12 is provided to stand upright from the top of the protrusion 11 towards the axis position of the rotary tub 3. A base end side 12a of the blade 12 is fixed to the protrusion 11 by a fixing means 13 such as bolts or rivets. Alternatively, the blade 12 may be made flat, and the blade 12 may be attached to the protrusion 11 by a separate mounting member (for example, a pair of plates).

The rising direction tip side of the blade 12 is formed as a serrated blade 12b. However, the shape of the blade is not limited to serrated and may be, for example, hook-shaped, needle-shaped, or other forms.

In the embodiment, multiple blades 12 are attached at intervals to one protrusion 11, but a single elongated blade may be attached instead.

The blade 12 is preferably made of a highly corrosion-resistant metal such as stainless steel, titanium, or titanium alloy.

To process the waste accommodating bag using the bag breaking device configured in this manner, the door panel 6 is opened, the waste accommodating bag is inserted into the rotary tub 3, and after closing the door panel 6, the rotary tub 3 is rotated by the motor 5. In this case, the rotary tub 3 may be rotated in one direction or may be reciprocally rotated in forward and reverse directions.

As the rotary tub 3 rotates, the bag is torn by the blade 12, and the waste accommodated inside comes out of the bag. Moreover, by using reciprocating rotation, the bag can be efficiently torn.

The bag breaking is performed in a completely sealed state, so odors and waste do not escape to the outside.

In the present invention, after performing the bag breaking, the waste and bag residue may be removed from the drum-type washing machine, but it is preferable to continue processing within the drum-type washing machine. The processing preferably includes washing the waste and bag residue using the washing function of the drum-type washing machine, followed by dewatering performed by high-speed rotation of the rotary tub 3, or drying using the drying function of the drum-type washing machine. The washing may be either washing using a surfactant or water washing, or a combination of both. By injecting steam into the interior of the rotary tub 3 during washing, the water temperature can be raised to increase washing efficiency, or sterilization may be performed (e.g., at 80°C for 10 minutes or more).

In addition to a surfactant, treatment using other chemical agents can also be performed. For example, oxidation treatment or sterilization treatment can be carried out using an aqueous solution of an oxidizing agent or disinfectant.

By increasing the temperature during the aforementioned drying process, heat sterilization treatment may be performed. One or more of the above treatment may be repeated.

After performing the above processing, the door panel 6 can be opened to remove the processed material, and sorting or processing of SAP (Super Absorbent Polymer) may be carried out.

In this manner, according to the embodiment, by placing a bag body accommodating waste into the rotary tub 3 and rotating the rotary tub 3, the bag can be broken. Additionally, the waste and bag residue inside the rotary tub 3 can be washed within the rotary tub 3. By using water containing an oxidizing agent or disinfectant, the waste and other materials can be sterilized. After washing, dewatering can be performed by rotating the rotary tub 3 at high speed. Furthermore, by supplying hot air into the rotary tub 3, the waste and other materials can be dried. Heat sterilization can also be performed by increasing the temperature of the hot air for heat treatment.

According to the embodiment, the work of tearing a bag and removing contents becomes unneeded. Additionally, the opportunity for a worker to directly contact used contents is almost eliminated, improving work safety. A bag breaking rate of 99% or higher may be achieved, eliminating the need for additional manual work. Furthermore, even for the waste with odors, high-quality recycling becomes achievable by performing washing. Moreover, by washing the waste, value of the waste during recycling is increased.

The waste to be processed in the present invention may be any of infectious waste, waste in a soiled state (for example, paper diapers), food waste, etc.

The above-described embodiment is an example of the present invention, and the present invention may be implemented in forms other than those described above. For example, a filtration mechanism may be provided that draws out a portion of the water from the water tank 2, filters the portion of the water through a filter, and then returns the portion of the water to the water tank 2.

In the above-described embodiment, a commercially available drum-type washing machine is utilized, but in the present invention, other types of drum-type washing machines may be used.

While the present invention has been described in detail using specific embodiments, it is apparent to those skilled in the art that various modifications may be made within the scope in which the effects of the invention are achieved.

This application is based on Japanese Patent Application Laid-Open No. 2022-118122 filed on July 25, 2022, which is incorporated by reference in its entirety.

### Reference Signs List

2: Water tank
3: Rotary tub
5: Motor
6: Door panel
9: Drain valve
11: Protrusion
12: Blade

## Claims

1. A bag breaking device for tearing a waste accommodating bag body, using a drum-type washing machine which comprises
a water tank for storing washing water, a rotary tub of a bottomed cylindrical shape which is rotatably supported inside the water tank such that a rotation axis thereof is substantially horizontal and which accommodates laundry, and a motor for rotating the rotary tub, wherein
a blade for bag breaking is provided on an inner circumferential surface of the rotary tub.

2. The bag breaking device according to claim 1, wherein
a protrusion extending in a direction parallel to an axis line of the rotary tub is provided on the inner circumferential surface of the rotary tub, and
the blade is attached to the protrusion.

3. A method for processing a waste accommodating bag body, comprising: tearing a waste accommodating bag body using the bag breaking device according to claim 1 or 2; and subsequently performing washing of waste and a bag residue inside the rotary tub.

4. The method for processing a waste accommodating bag body according to claim 3, further comprising performing at least one of dewatering, drying, chemical treatment, and heat treatment.

5. The method for processing a waste accommodating bag body according to claim 4, wherein a chemical for the chemical treatment comprises at least one of an oxidizing agent, a disinfectant, and a cleaning agent (surfactant).

6. The method for processing a waste accommodating bag body according to claim 3, wherein the waste comprises a used paper diaper.
